# EUROPÄISCHE PATENTSCHRIFT

(11) **EP 1 565 349 B1**
(45) Veröffentlichungstag und Bekanntmachung des Hinweises auf die Patenterteilung: **31.05.2006**
(21) Anmeldenummer: 03758026.3
(22) Anmeldetag: 21.10.2003
(51) Int. Cl.: B60R 16/00, G06F 1/32

(54) **VORRICHTUNG ZUM WECKEN EINES STEUERGERÄTES**
DEVICE FOR WAKING UP A CONTROL UNIT
DISPOSITIF POUR REACTIVER UN APPAREIL DE COMMANDE

(30) Priorität: 28.11.2002 DE 10255449
(43) Veröffentlichungstag der Anmeldung: 24.08.2005
(73) Patentinhaber: DaimlerChrysler AG, 70567 Stuttgart (DE)
(72) Erfinder: HUBERT, Walter, 64289 Darmstadt (DE); NAGEL, Gerhard, 71116 Gärtingen (DE)
(86) Internationale Anmeldenummer: PCT/EP2003/011616
(87) Internationale Veröffentlichungsnummer: WO 2004/048156

(56) Entgegenhaltungen:
- EP-A- 0 744 322
- EP-A- 0 968 884
- US-A- 5 767 844
- US-A1- 2001 028 241

## Beschreibung

Die Erfindung betrifft eine Vorrichtung zum Wecken eines Steuergerätes in einem Verkehrsmittel mit einer Stromversorgungsschaltung für das Steuergerät, um dieses von einem Normalbetriebszustand in einen Ruhezustand zu versetzen, und mit einem Weckmittel, welches bei dessen Betätigung die Stromversorgung durchschaltet, um das Steuergerät in den Normalbetriebszustand zu versetzen.

In Verkehrsmitteln, insbesondere Kraftfahrzeugen und Flugzeugen, sind Datenbussysteme im Einsatz; durch die viele einzelne Steuergeräte vernetzt sind. Zur Verringerung der Leistungsaufnahme sind sowohl der Datenbus als auch die Steuergeräte ganz oder nur teilweise in bestimmte Zustände versetzbar, in denen Steuergeräte unter voller Leistungsaufnahme im Normalbetriebszustand oder in einem Ruhezustand arbeiten, in dem die Leistungsaufnahme reduziert ist.

Bei Verkehrsmitteln werden derartige vernetzte Systeme, bspw. ein sogenannter CAN-Bus gemäß ISO 11519 bzw. ISO 11898 eingesetzt, um Motorfunktionen oder Komfortfunktionen im FahrzeugInnenraum zu steuern. In den letzten Jahren ist eine weitere Spezialisierung bei diesen Datenbussystemen erfolgt, so dass auch weitere Datenbusse für brake-by-wire-Systeme oder für die Telekommunikation, wie z.B. D2B- oder MOST-Datenbusse, zum Einsatz kommen. Durch den hohen Grad der Vernetzung besteht nun das Problem, dass das Bordnetz selbst dann belastet wird, wenn das Verkehrsmittel abgestellt ist und eigentlich keine oder nur wenige Steuerungsfunktionen erforderlich sind. Um die Leistungsaufnahme im Ruhezustand zu verringern, werden die Steuergeräte nach einer bestimmten Zeit abgeschaltet, wobei aber erforderlich ist, dass das System beispielsweise ein Signal von einem Transponder zum Entriegeln einer Tür o. dgl. empfangen kann. Dazu müssen die einzelnen Steuergeräte durch den Transponder oder auch andere Bedienschalter bzw. Signale aus dem Ruhezustand weckbar sein.

Die DE 197 15 880 Cl offenbart ein System mit datenbusvernetzten Steuergeräten. Ein einzelnes Steuergerät ist als MasterSteuergerät vorgesehen und ist mit einer Standby-Betriebsfunktion mit Weckbereitschaft ausgestattet und ständig aktiv. Im Ruhezustand des Kraftfahrzeugs befindet sich das Mastersteuergerät in einem Standby-Zustand, während die übrigen Steuergeräte abgeschaltet sind. Erhält das Mastersteuergerät ein Wecksignal, so weckt es über eine Steuerleitung die übrigen Steuergeräte, so dass diese wieder mit Strom versorgt werden und in ihrer Normalfunktion einsatzfähig sind.

In der DE 196 11 945 Cl ist ein System offenbart, dessen Steuergeräte in einem Betriebszustand verharren, aus dem sie sehr schnell wieder in einen Normalbetriebszustand versetzbar sind. Dazu ist vor jedes Steuergerät und vor dessen Busprotokoll-Modul eine Halbleiterschaltung geschaltet, die aus einem übergeordneten Spannungspotential versorgbar ist und mittels eines Steuereingangs aus einem Sleep-Modus geweckt werden kann. Der Weckvorgang erfolgt über ein Steuersignal, in dessen Folge die genannte Halbleiterschaltung die Stromversorgung durchschaltet.

Bei diesen bekannten Systemen muss mindestens ein Steuergerät immer angeschaltet bleiben, das dann bei Bedarf die übrigen Steuergeräte wecken kann. Bei einem Ruhezustand bei dem auch der Spannungsregler des letzten Steuergerätes abgeschaltet wird, besteht das Problem, dass die Steuergeräte nicht mehr geweckt werden können, da die Schalter zum Wecken bzw. die Logikschaltungen, die zum Durchschalten der Betriebsspannung für das Steuergerät erforderlich sind, nicht mit Strom versorgt sind und daher auch nicht funktionsfähig sind. Denn ein stromloser Bedienschalter kann die Stromversorgung für das Steuergerät nicht durchschalten. Beispielsweise beim Wecken durch einen Transponder muss auch eine Logikschaltung mit Strom versorgt sein. Der Strom ist aber im Ruhezustand nicht vorhanden, da die Spannungsversorgung abgeschaltet ist und die Schalter bzw. vorhandene Logikschaltungen über die Betriebsspannung des jeweiligen Steuergerätes mitversorgt werden.

Die US 5,767,844 zeigt einen Computer mit einer Tastatur. An der Tastatur ist ein Schalter zum Einschalten des Computers angebracht, dessen Einschalt-Impuls über ein USB-Kabel zur Spannungsversorgung des Computers übertragen wird, um diesen einzuschalten. Zur Bereitstellung der Einschaltenergie ist der Schalter durch eine separate Batterie gepuffert. Diese Ausführung hätte beim PKW den Nachteil, dass ständig eine geladene Pufferbatterie vorhanden sein muss, die über Lebzeit des Fahrzeugs immer wieder ersetzt werden muss.

Es ist Aufgabe der vorliegenden Erfindung, eine Vorrichtung zum Wecken eines Steuergerätes derart weiterzubilden, dass einzelne Steuergeräte aus einem Ruhezustand, bei dem die Spannungsversorgung der Steuergeräte abgeschaltet ist, wieder in den Normalbetriebszustand versetzt werden können, ohne dass ein Mastersteuergerät betriebsbereit bleiben muss, um die elektrische Energie für den Weckvorgang bereitzustellen.

Diese Aufgabe wird erfindungsgemäß durch die Merkmale des unabhängigen Anspruchs 1 gelöst. Danach wird das Weckmittel im Ruhezustand nicht mit Strom versorgt und ein entladbarer Energiespeicher ist vorgesehen, so dass beim Betätigen des Weckmittels die Energie des Energiespeichers eingesetzt wird, um das Steuergerät in den Normalbetriebszustand zu überführen, wobei durch die Energie des Energiespeichers ein Schalter betätigbar ist, der das Steuergerät an eine Stromversorgungsleitung schaltet. Der Energiespeicher (5, 8) ist im Normalbetriebszustand aufladbar oder die mechanische Energie ist beim Betätigen des Weckmittels (2) in elektrische Energie wandelbar.

Bei der Vorrichtung gemäß der vorliegenden Erfindung ist ein Weckmittel vorgesehen, das mindestens ein Bedienelement, wie einen Bedienschalter, eine Fernbedienung oder eine Zutritts-Chipkarte aufweist. Zusätzlich kann das Weckmittel noch eine Logikschaltung vorsehen, die bspw. die Zugriffsberechtigung durch einen Sicherheitscode oder dgl. überprüft. Erfindungsgemäß hat das Weckmittel einen eigenen Energiespeicher, aus dem die Energie für den Weckvorgang und für die logische Überprüfung der Weckanfrage stammt. Infolgedessen kann das dem Weckmittel zugeordnete Steuergerät abgeschaltet werden, da es nicht zur Energieversorgung für das Weckmittel in Betrieb bleiben muss.

Bei einer bevorzugten Weiterbildung der Erfindung kann ein zwischen der Verkehrsmittel-Batterie und dem Steuergerät angeordneter Spannungsregler durch den Schalter ebenfalls abgeschaltet werden, wenn sich das Verkehrsmittel und damit das Steuergerät im Ruhezustand befindet. Dies ist ein erheblicher Vorteil, da die Lebensdauer des Spannungsreglers erhöht und der Stromverbrauch des Steuergeräts erheblich verringert wird. Der Spannungsregler versorgt im Normälbetriebszustand das Steuergerät mit einer Betriebsspannung Vcc, bspw. 5 Volt, wobei der Spannungsregler im Ruhezustand abgeschaltet ist. Das Weckmittel schließt dann bspw. bei dessen Betätigung einen elektrischen Schalter, insbesondere einen Transistor oder ein Relais. Der Schalter verbindet dann das Steuergerät oder den Spannungsregler mit der elektrischen Versorgungsspannung U_Bat der Verkehrsmittel-Batterie.

Der Energiespeicher des Weckmittels wird geladen, wenn beim Betätigen des Weckmittels die mechanische Betätigungskraft in elektrische Energie gewandelt wird. Dazu kann ein Piezogenerator oder ein Energiegewinnungsmittel vorgesehen sein, bei dem ein Metallkörper oder -draht durch ein Magnetfeld bewegt wird, wodurch eine Spannung induziert wird. Im Ergebnis stellt der Energiespeicher des Weckmittels die elektrische Energie zur Verfügung, die zum Schließen eines Schalters erforderlich ist, um das zugeordnete Steuergerät zu wecken. Zusätzlich oder alternativ zum Energiespeicher ist ein Hilfs-Energiespeicher im Normalbetriebszustand aufladbar.

Falls ein Piezogenerator im Weckmittel vorgesehen ist, kann dieser mit einem mechanischen Energiespeicher gekoppelt sein, der dann eine Energiewandlung in elektrische Energie ermöglicht, um einen Schalter zum Wecken des Steuergerätes zu betätigen. Der Piezogenerator erzeugt durch Betätigen des Bedienschalters des Weckmittels eine elektrische Energie, die den Energiespeicher des Weckmittels auflädt. Überschreitet die eingespeicherte Energie einen Schwellwert, so wird die im Energiespeicher vorhandene Energie an eine dem Weckmittel zugeordnete Logikschaltung abgegeben. Die Logikschaltung überprüft dann ggf. definierte Einschaltbedingungen für das Steuergerät und schaltet bei positivem Ergebnis die Energieversorgung des Verkehrsmittels, d.h. die Verkehrsmittel-Batterie für das entsprechende Steuergerät durch, so dass dieses in den Normalbetriebszustand hochfahren kann.

Ein elektronischer Schlüssel für die Zutrittsberechtigung zum Kraftfahrzeug kann ohne eigene Batterie vorgesehen sein, da bei Betätigung die Sendeenergie aus dem Energiespeicher des elektronischen Schlüssels stammt. Innerhalb des Kraftfahrzeugs kann der elektronische Schlüssel dann über elektromagnetische Kopplung mit Energie versorgt werden, so dass sich der als Akkumulator vorgesehen Energiespeicher zusätzlich aufladen kann.

Ein Vorteil der Erfindung besteht darin, dass das bisher ständig am Bordnetz mit Strom versorgte Weckmittel im Ruhezustand vom Bordnetz unabhängig betrieben werden kann. Infolgedessen kann auch ein zugeordnetes Steuergerät insgesamt in einen stromlosen Zustand versetzt werden, da dass Weckmittel nicht durch das Steuergerät mit Strom versorgt werden muss. In Folge der vorliegenden Erfindung lässt sich die Energiebilanz im Bordnetz während des Ruhezustands des Datenbussystems erheblich verbessern. Bisher durch die Verkehrsmittelbatterie betriebene Komponenten können ohne diese Stromversorgung vorgesehen sein.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen.

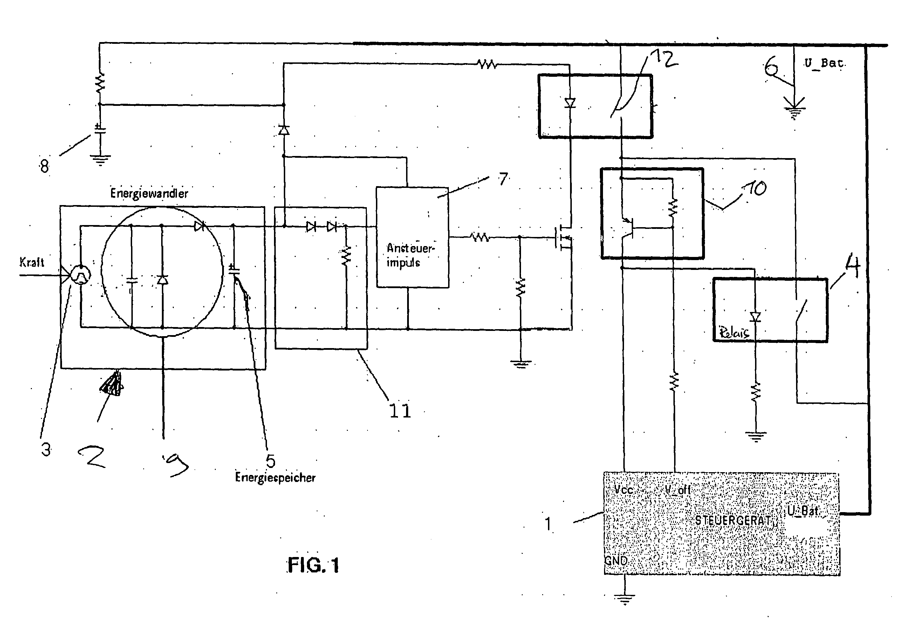

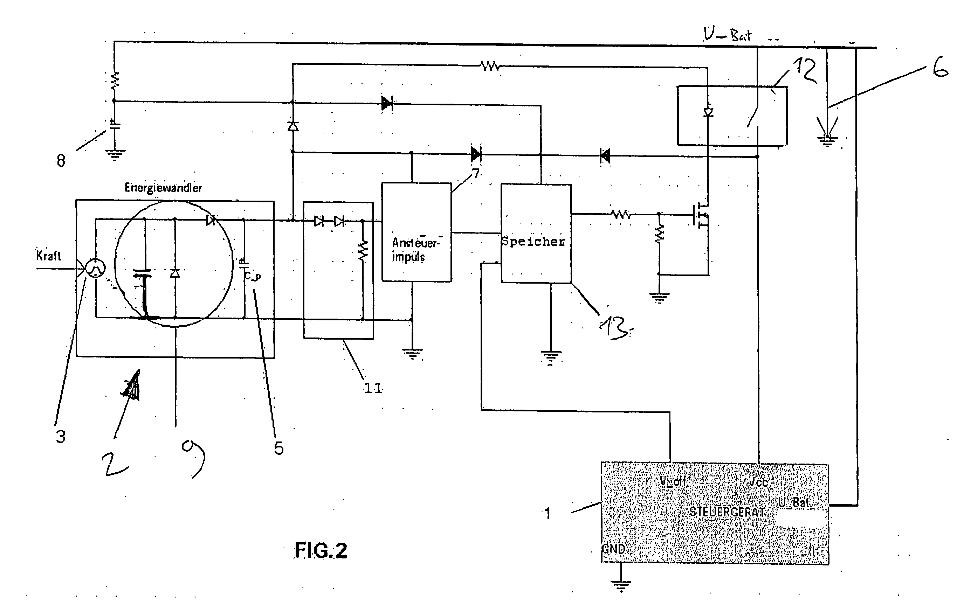

Die Fig. 1 und die Fig. 2 zeigen jeweils einen Schaltplan für eine elektronische Ausgestaltung der erfindungsgemäßen Vorrichtung mit einem Weckmittel, einem Energiespeicher und dem zugeordneten Steuergerät.

Die Vorrichtung zum Wecken des Steuergerätes 1 weist ein Weckmittel 2 auf, welches bei Betätigung eines Bedienelementes 3 die Stromversorgung für das Steuergerät 1 mittels eines elektronischen Schalters, z.B. eines elektronischen Relais 4, durchschaltet. Mit Hilfe des Schalters 10 kann das Steuergerät 1 durch ein von der Software des Steuergeräts 1 erzeugtes Ausschaltsignal V_off in einen Ruhezustand versetzt werden, indem die Verbindung zwischen Steuergerät 1 und Batteriespannung U_Bat unterbrochen wird.

Die Vorrichtung kann in einem Datenbussystem eingesetzt werden, wo viele Steuergeräte 1 miteinander vernetzt sind. Im Betrieb des Verkehrsmittels, insbesondere während der Fahrt eines Kraftfahrzeugs, befinden sich die Steuergeräte 1 im Normalbetriebszustand, in dem jedes Steuergerät 1 von der Batteriespannung U_Bat versorgt wird. Die intern im Steuergerät 1 benötigten Betriebsspannungen Vcc von z.B. 5V werden durch zugeordnete Spannungsregler erzeugt, die von der Batteriespannung U_Bat gespeist werden. Bei dem Steuergerät 1 können alle internen Spannungsregler im Ruhezustand abgeschaltet werden. Es muss also nicht wie beim Stand der Technik ein endlicher Ruhestrom verbleiben, der zur Erkennung einer Funktionsanforderung benötigt wird. Der Vorteil der in der Anmeldung vorgestellten Realisierung liegt darin, dass sich das Steuergerät 1 im Ruhezustand praktisch in einem stromlosen Zustand befindet oder ggf. nur einen sehr geringen Leckstrom (< 1 µA) verbraucht.

Das Weckmittel 2 ist vorgesehen, um das zugeordnete Steuergerät 1 von dem Ruhezustand in den Normalbetriebszustand zurück zu schalten. Im Ruhezustand ist das Weckmittel 2 nicht mit Strom versorgt. Beim Betätigen des Bedienschalters 3 des Weckmittels 2 wird die hierbei erzeugte elektrische Energie in einen Energiespeicher 5 geladen, ggf. wird noch ein Teil der Energie in einen Hilfs-Energiespeicher 8 geladen. Der Hilfs-Energiespeicher 8 wird aus der Batterie 6 über einen Widerstand im geladenen Zustand gehalten. Die Energie der Energiespeicher 5 und 8 wird dazu benutzt, für wenige Millisekunden sowohl die Versorgungsspannung für eine Impulserzeuger-Stufe 7 (z.B. in CMOS-Technik)bereitzustellen als auch das Eingangssignal für die Impulsstufe 7 mit Hilfe einer Eingangsbeschaltung 11 so zu erzeugen, dass ein sicherer Schaltvorgang hervorgerufen wird.

Zur Erzeugung der Weckenergie kann ein sogenannter piezoelektrischer Generator, kurz Piezogenerator 9, eingesetzt werden, in dem durch die mechanische Betätigungsenergie am Bedienelement 3 eine elektrische Energie erzeugt wird, durch die der Energiespeicher 5 aufgeladen wird. Die Energie lässt sich dann zum Schalten der elektrischen Schalter 4, 12 verwenden und zusätzlich kann die elektrische Energie Zulässigkeitsprüfungen und Diagnosefunktionen ermöglichen. Dem Energiespeicher 5 kann jeweils ein Gleichrichter 14 vorgeschaltet sein, der die Nutzung beider Polaritäten der durch den Piezogenerator 9 erzeugten Wechselspannung zulässt. Ferner kann der Hilfsenergiespeicher 8 eine Zusatzenergie liefern, die die Energiebereitstellung aus dem Energiespeicher 5 beim Einschaltvorgang ergänzt.

Der Ausgang der Ansteuer-Impulsstufe 7 stellt ein Schaltsignal mit zeitlich definierter Länge, z.B. 1 ms bereit, das zuerst das Halbleiterrelais 12 einschaltet. Zum Einschalten des Halbleiterrelais 12 wird ein definierter Strom benötigt, der aus dem Energiespeicher 5 und/oder aus dem Hilfsenergiespeicher 8 geliefert wird. Bei vorhandenem Hilfsenergiespeicher 8 kann der technische Aufwand beim Weckmittel 2 reduziert werden, da der Energiespeicher kleiner dimensioniert werden kann. Der durch den Hilfsenergiespeicher 8 entstehende Leckstrom ist sehr gering. Durch geeignete Speicherkondensatoren (z.B. Folienkondensator) kann der Leckstrom auf Werte unter 10nA begrenzt werden.

Der im Relais 12 kurzzeitige ausgelöste Schaltvorgang führt zum sofortigen Einschalten von Relais 4, das in einer Selbsthalteschaltung verbleibt. Der Schalter 10 ist normalerweise durchgeschaltet, falls er nicht vom Steuergerät 1 ein Sperrsignal V_off erhält. Das Einschalten des Relais 4 führt zu einem Aufschalten der Batteriespannung U_Bat an den Eingang des Halbleiterrelais 12, so dass die Batteriespannung 6 auf das Steuergerät 1 durchgeschaltet ist. Der geschaltete Stromversorgungspfad für das Steuergerät 1 ist in der Lage, den vom Steuergerät 1 in Normalbetrieb benötigten Strombedarf zu decken. Die Stromversorgung des Steuergeräts 1 wird durch Bereitstellen des Ausschaltsignals V_off unterbrochen, wenn das Steuergerät 1 in den Ruhezustand umschaltet.

Ein ungewolltes Einschalten des Steuergerätes 1 durch elektromagnetische Störfelder ist praktisch ausgeschlossen, da die Störungen so energiereich sein müssten, dass sie die Impulsstufe mit Spannung versorgen und dazu noch einen relativ langen Eingangsimpuls für die Impulsstufe 7 aufrecht erhalten müssten, um ein unbeabsichtigtes Schalten hervorzurufen.

In Fig.2 ist eine weitere Ausführungsform der Weckschaltung dargestellt. Im Unterschied zur ersten Ausführungsform wird die Selbsthaltefunktion durch eine Speicherschaltung 13, z.B. in CMOS-Technik, realisiert. Die Speicherschaltung 13 kann zwei rückgekoppelte NAND-Gatter aufweisen. Die Speicherschaltung 13 muss während der gesamten Zeit, in der das Steuergerät 1 im Normalbetrieb arbeitet, mit Spannung versorgt werden, damit das Ausschaltsignal des Steuergeräts 1 verarbeitet werden kann. Die Spannungsversorgung für die Speicherschaltung 13 kann zusätzlich zur Versorgung aus dem Kurzzeit-Energiespeicher 5 entweder aus dem Hilfs-Energiespeicher 8 und/oder aus der durchgeschalteten Versorgungsspannung Vcc für das Steuergerät 1 erfolgen. Damit ist sichergestellt, dass vom Steuergerät 1 während des Normalbetriebs ein Ausschaltsignal V_off erzeugt werden kann, um es von der Batteriespannung U_Bat abzutrennen. Der Energiespeicher 5 wird nicht aus der Hilfsspannungsquelle 8 oder von der durchgeschalteten Batteriespannung Vcc gespeist, sondern im Normalbetrieb direkt über die Batteriespannung U_Bat aufgeladen.

Der in Fig.2 dargestellte Schalter 12 kann ein elektronisches Relais oder eine diskrete Transistorschaltung sein. Nach erfolgtem Wecken führt das Steuergerät 1 seine Softwaregesteuerte Funktion aus. Dazu kann auch die Erkennung der Zugriffsberechtigung der bedienenden Person gehören. Die für die Erkennung der Zugriffsberechtigung benötigte Energie wird in diesem Fall aus der zugeschalteten Versorgungsspannung Vcc geliefert. Bei negativem Prüfergebnis kann das Steuergerät 1 von der Spannungsversorgung abgekoppelt werden. Insbesondere bei Schließfunktionen in Verbindung mit der Tür eines Verkehrsmittels kann die für die Prüfung der Zugriffsberechtigung erforderliche Energie nur durch die bei dem Weckvorgang selbst erzeugte Energie erfolgen, wenn im Ruhezustand alle Spannungsregler abgeschaltet sind.

Das Steuergerät 1 wird mit der Versorgungsspannung Vcc versorgt, die durch einen Spannungsregler bereitgestellt wird. Der Spannungsregler sorgt im Normalbetriebszustand für die optimale Betriebsspannung des Steuergerätes 1. Eine Logikschaltung kann zur Prüfung der Zugriffsberechtigung vorgesehen sein, wenn das Steuergerät 1 durch das Weckmittel 2 in den Normalbetriebszustand geschaltet werden soll.

## Patentansprüche

1. Vorrichtung zum Wecken eines Steuergerätes (1) in einem Verkehrsmittel mit einer Stromversorgungsschaltung für das Steuergerät(1), um dieses von einem Normalbetriebszustand in einen Ruhezustand zu versetzen, und mit einem Weckmittel (2), welches bei dessen Betätigung die Stromversorgung durchschaltet, um das Steuergerät (1) in den Normalbetriebszustand zu versetzen,
**dadurch gekennzeichnet, dass** das Weckmittel (2) im Ruhezustand nicht mit Strom versorgt ist und einen entladbaren Energiespeicher (5, 8) aufweist, so dass beim Betätigen des Weckmittels (2) die Energie des Energiespeichers (5, 8) eingesetzt wird, um das Steuergerät (1) in den Normalbetriebszustand zu überführen, wobei durch die Energie des Energiespeichers (5, 8) ein Schalter (4, 10, 12) betätigbar ist, der das Steuergerät (1) an eine Stromversorgung (6) schaltet, und dass der Energiespeicher (5, 8) im Normalbetriebszustand aufladbar ist oder die mechanische Energie beim Betätigen des Weckmittels (2) in elektrische Energie wandelbar ist.

2. Vorrichtung nach Anspruch 1, **dadurch gekennzeichnet, dass** der Energiespeicher/Hilfsenergiespeicher (8) einen Speicherkondensator oder Folienkondensator aufweist.

3. Vorrichtung nach einem der Ansprüche 1 oder 2, **dadurch gekennzeichnet, dass** ein elektrischer Schalter (4, 10, 12) zwischen der Verkehrsmittel-Batterie (6) und dem Steuergerät (1) angeordnet ist und dass der Schalter (4, 10, 12) im Normalbetriebszustand das Steuergerät (1) mit einer Betriebsspannung (U_Bat) versorgt, wobei der Schalter (4, 10, 12) im Ruhezustand sperrt, so dass das Steuergerät (1) im Ruhezustand stromlos geschaltet ist.

4. Vorrichtung nach Anspruch 1, **dadurch gekennzeichnet, dass** das Weckmittel (2) einen Piezogenerator (9) aufweist.

5. Vorrichtung nach einem der Ansprüche 1 bis 4, **dadurch gekennzeichnet, dass** der Piezogenerator (9) mit einem mechanischen Energiespeicher gekoppelt ist.

6. Vorrichtung nach einem der Ansprüche 4 oder 5, **dadurch gekennzeichnet, dass** dem Energiespeicher (5, 8) ein Gleichrichter vorgeschaltet ist, der die Nutzung beider Polaritäten der durch den Piezogenerator (9) erzeugten Wechselspannung zulässt.

7. Vorrichtung nach einem der Ansprüche 1 bis 5, **dadurch gekennzeichnet, dass** der Hilfsenergiespeicher (8) eine Zusatzenergie liefert, die die Energiebereitstellung aus dem Energiespeicher (5) beim Einschaltvorgang ergänzt.

## Claims

1. A device for waking up a control device (1) in a means of transport having an electrical power supply circuit for the control device (1) in order to switch the latter from a normal operating mode to an idle mode, and having a waking means (2) which when actuated switches the electrical power supply through in order to switch the control device (1) to normal operating mode,
**characterised** i n that
the waking means (2) is not supplied with electricity in idle mode and has a dischargeable energy accumulator (5, 8) so that when the waking means (2) is actuated the energy in the energy accumulator (5, 8) is used to switch the control device (1) to normal operating mode, the energy in the energy accumulator (5, 8) being able to actuate a switch (4, 10, 12) which connects the control device (1) to an electrical power supply, and the energy accumulator (5, 8) can be charged in normal operating mode or the mechanical energy can be converted into electrical energy when the waking means (2) is actuated.

2. A device in accordance with claim 1,
**characterised in that**
the energy accumulator/auxiliary energy accumulator (8) has a storage capacitor or film capacitor.

3. A device in accordance with one of claims 1 or 2,
**characterised in that**
an electrical switch (4, 10, 12) is positioned between the battery (6) of the transport means and the control device (1) and in normal operating mode the switch (4, 10, 12) supplies the control device (1) with an operating voltage (U_Bat), the switch (4, 10, 12) being blocked in idle mode so that
there is no current in to the control device (1).

4. A device in accordance with claim 1,
**characterised in that**
the waking means (2) has a piezo generator (9).

5. A device in accordance with one of claims 1 to 4,
**characterised in that**
the piezo generator (9) is coupled to a mechanical energy accumulator.

6. A device in accordance with one of claims 4 or 5,
**characterised in that**
connected to the energy accumulator (5,8) is a rectifier which permits the use of both polarities of the alternating voltage generated by the piezo generator (9).

7. A device in accordance with one of claims 1 to 5,
**characterised in that**
the auxiliary energy accumulator (8) supplies additional energy which supplements the energy provided by the energy accumulator (5) during the switching on process.

## Revendications

1. Dispositif pour réactiver un appareil de commande (1) dans un moyen de transport avec un circuit d'alimentation électrique pour l'appareil de commande (1) afin de faire passer celui-ci d'un état de service normal à un état de repos, et avec des moyens de réactivation (2) qui, par leur actionnement, interconnectent l'alimentation électrique afin de faire passer l'appareil de commande (1) dans l'état de service normal,
**caractérisé en ce que** les moyens de réactivation (2) à l'état de repos ne sont pas alimentés en courant et qu'ils présentent une réserve d'énergie déchargeable (5, 8) de sorte que, lors de l'actionnement des moyens de réactivation (2), l'énergie de la réserve d'énergie (5, 8) soit mise en oeuvre afin de mettre l'appareil de commande (1) dans l'état de service normal, sachant qu'il est possible par le biais de l'énergie de la réserve d'énergie (5, 8) d'actionner un interrupteur (4, 10, 12) qui connecte l'appareil de commande (1) à une alimentation électrique (6), et **en ce que** la réserve d'énergie (5, 8) peut être chargée dans l'état de service normal ou **en ce que** l'énergie mécanique peut être convertie en énergie électrique lors de l'actionnement des moyens de réactivation (2).

2. Dispositif selon la revendication 1, **caractérisé en ce que** la réserve d'énergie ou la réserve d'énergie auxiliaire (8) présente un condensateur de puissance ou un condensateur électrolytique.

3. Dispositif selon l'une des revendications 1 ou 2, **caractérisé en ce qu'**un interrupteur électrique (4, 10, 12) est disposé entre la batterie du moyen de transport (6) et l'appareil de commande (1) et **en ce que** l'interrupteur (4, 10, 12) alimente l'appareil de commande (1) dans l'état de service normal avec une tension de service (U_Bat) que l'interrupteur (4, 10, 12) bloque dans l'état de repos de sorte que l'appareil de commande (1) ne soit pas alimenté en courant à l'état de repos.

4. Dispositif selon la revendication 1, **caractérisé en ce que** les moyens de réactivation (2) présentent un générateur piézoélectrique (9).

5. Dispositif selon l'une des revendications 1 à 4, **caractérisé en ce que** le générateur piézoélectrique (9) est couplé à une réserve d'énergie mécanique.

6. Dispositif selon l'une des revendications 4 ou 5, **caractérisé en ce qu'**un redresseur est monté en amont de la réserve d'énergie (5, 8), lequel autorise l'utilisation des deux polarités de la tension alternative générée par le générateur piézoélectrique (9).

7. Dispositif selon l'une des revendications 1 à 5, **caractérisé en ce que** la réserve d'énergie auxiliaire (8) délivre une énergie supplémentaire qui complète la fourniture d'énergie provenant de la réserve d'énergie (5) lors de l'opération de mise en marche.
